# EUROPÄISCHE PATENTSCHRIFT

(11) **EP 1 073 878 B1**
(45) Veröffentlichungstag und Bekanntmachung des Hinweises auf die Patenterteilung: **11.09.2002**
(21) Anmeldenummer: 99922060.1
(22) Anmeldetag: 23.03.1999
(51) Int. Cl.: G01B 11/06

(54) **VERFAHREN UND VORRICHTUNG ZUR BERÜHRUNGSLOSEN MESSUNG DER WANDDICKE**
METHOD AND DEVICE FOR CONTACTLESS MEASUREMENT OF WALL THICKNESS
PROCEDE ET DISPOSITIF POUR LA MESURE SANS CONTACT DE L'EPAISSEUR D'UNE PAROI

(30) Priorität: 23.04.1998 DE 19818190
(43) Veröffentlichungstag der Anmeldung: 07.02.2001
(73) Patentinhaber: VMA Gesellschaft Für Visuelle Messtechnik und Automatisierung mbH, 98704 Wümbach (DE)
(72) Erfinder: KIESSLING, Bernd, D-98704 Langewiesen (DE); HERMANN, Peter, D-99326 Stadtilm (DE); TUCH, Carsten, D-98701 Herschdorf (DE)
(74) Vertreter: Buff, Ursula
(86) Internationale Anmeldenummer: DE9900834
(87) Internationale Veröffentlichungsnummer: WO99056076

(56) Entgegenhaltungen:
- EP-A- 0 584 673
- DE-A- 3 724 932
- DE-A- 4 143 186
- US-A- 5 636 027
- PATENT ABSTRACTS OF JAPAN vol. 007, no. 096 (P-193), 22. April 1983 (1983-04-22) & JP 58 022902 A (ASAHI GLASS KK), 10. Februar 1983 (1983-02-10)

## Beschreibung

Die Erfindung betrifft ein Verfahren und eine Vorrichtung für die berührungslose Messung der Dicke von transparenten Materialien. Sie ist besonders für die Wanddickenmessung von Behälterglas geeignet.

Es sind bereits Verfahren und Vorrichtungen für die automatische berührungslose Wanddicken-messung bekannt. (DD 261 832, EP 584 673, US 4 902 903, US 3 807 870). Diese Vorrichtungen verwenden einen Laserstrahl, der unter einem gewissen Einfallswinkel auf das Meßobjekt gerichtet wird.

Der Laserstrahl wird auf der Vorderseite des Meßobjekts teilweise reflektiert. Ein weiterer Teil des Strahls wird in das Material hineingebrochen, an der Rückseite reflektiert und an der Vorderseite nochmals gebrochen, so daß zwei Laserstrahlen von dem Meßobjekt zurückreflektiert werden. Der Abstand der beiden zurückreflektierten Laserstrahlen ist ein Maß für die Wanddicke und wird entsprechend ausgewertet. In Strahlrichtung der Reflexe ist als Auswerteeinrichtung meist ein Zeilensensor angeordnet.

Nachteilig an diesen Vorrichtungen ist, daß sie für die Messung an Behälterglas nicht verwendet werden können. Die Oberfläche von Behälterglas ist, gemessen an den Dimensionen des Laserstrahls, nicht glatt. Der scharf gebündelte, parallele Laserstrahl wird an der, verglichen mit den Abmessungen des Laserstrahls verhältnismäßig unebenen, narbigen Oberfläche der Behälter stochastisch abgelenkt. Die Reflexe des Laserstrahls, die an sich für die Bestimmung der Wanddicke verwendet werden sollen, werden damit häufig nicht in die Richtung der Empfangsoptik zurückreflektiert. Damit stehen meist keine Reflexe für die Meßwertbildung in den Kontrollern zur Verfügung. Nachteilig an diesen bekannten Vorrichtungen ist weiterhin, daß der Wanddickenmeßwert stark durch die Nichtparallelität der Wandung des Meßobjektes beeinflußt wird. Die beiden reflektierten Laserstrahlen verlaufen nur dann parallel, wenn die reflektierenden Oberflächen des Meßobjekts parallel sind. Schließen diese einen Keilwinkel ein, divergieren oder konvergieren die beiden reflektierten Strahlen, wodurch der Meßwert soweit verfälscht werden kann, daß er unbrauchbar ist.

Ein weiterer Fehlereinfluß geht von der Verkippung zwischen der Meßeinrichtung und dem Meßobjekt aus. Gerade bei Messungen in der laufenden Produktion ist es nicht immer zu gewährleisten, daß das Meßobjekt exakt positioniert wird. Die Oberflächennormale am Meßort kann deshalb in der Praxis um einen Verkippungswinkel von der Meßrichtung der Meßvorrichtung abweichen.

Es wurde bereits eine Vorrichtung vorgeschlagen, die den Meßfehler infolge Keiligkeit der Wandung und Verkippung des Meßobjektes kompensiert (DE 41 43 186). Diese Vorrichtung verwendet ebenfalls Laserstrahlen und ist damit auch nicht in der Lage, zuverlässig Reflexe an unebenen Oberflächen von Behälterglas zu liefern. Damit ist sie für die Dickenmessung an Behälterglas gleichfalls nicht geeignet.

Auch die weitere Vorrichtung (US 5 636 027), die ebenfalls zwei Meßsysteme verwendet, um den Fehler infolge Keiligkeit und Verkippung des Meßobjektes zu kompensieren, verwendet als Lichtquelle Laser. Auch in dieser Vorrichtung fallen die Laserstrahlen ohne weitere optische Behandlung wie zum Beispiel Strahlaufweitung und anschließende Fokussierung direkt auf das Meßobjekt und werden von dort auch direkt und parallel auf den optoelektronischen Sensor zurückreflektiert. Der Abstand der beiden Reflexpaare ergibt das Maß für die Wanddicke des Meßobjektes.

Ebenfalls einen Laser als Lichtquelle verwendet die Vorrichtung nach Patent JP 58 022 902. Der Laserstrahl in dieser Patentschrift wird zwar mittels Zylinderlinse zu einer Linie verformt, um auch an gekrümmten Oberflächen, z.B. TV Panels, die Messung ausführen zu können. Eine flächenhafte Strahlaufweitung erfolgt jedoch nicht. Der Laserstrahl wird zugleich durch einen Strahlteiler in zwei Strahlen aufgeteilt, die aus entgegengesetzten Richtungen auf das Meßobjektiv treffen. Infolge der scharfen Bündelung des Laserstrahls und der Verwendung von Laserlicht, das aus nur einem Einfallswinkel auf das Meßobjektiv trifft, kann die Bestimmung der Wanddicke ebenfalls nur aus 2 Reflexstrahlen-Paaren erfolgen. Damit diese Anordnung ebenfalls für die Messung an Behälterglas mit den dafür typischen rauhen, unebenen Oberflächen ungeeignet.

Nachteilig bei diesen bekannten Anordnungen ist ferner, daß bei stark keiligen oder gekrümmten Oberflächen und gleichzeitig begrenzter Apertur des Empfangs-objektivs die Reflexe nicht auf den Sensor abgebildet werden können. Sie werden in eine Richtung zurückreflektiert, die außerhalb der Öffnung der Empfangsoptik liegt und stehen damit nicht zur Meßwertbildung zur Verfügung.

Nach der DE 372 49 32 wurde ein Anordnung vorgeschlagen, mit der ein Laserstrahl zunächst aufgeweitet und anschließend auf das Meßobjekt fokussiert wird. Im Überlappungsgebiet der reflektierten Laserstrahlen an Vorder- und Rückseite des Meßobjektes ist ein opto-elektronischer Sensor angeordnet. Auf diesen treffen die Laserstrahlen auf, die im Überlappungsgebiet Interferenzen gleicher Neigung erzeugen. Der Abstand dieser Interferenzlinien wird als Maß der Dicke ausgewertet. Dieses Patent ist in seinem physikalischen Wesen grundverschieden zu den oben dargestellten Vorrichtungen, da nicht der Abstand von Reflektionen, sondern der Abstand von Interferenzlinien als Maß der Dicke ausgewertet wird.

Nachteilig an dieser Anordnung ist, daß sich die Interferenzlinien bei Bewegung des Meßobjektes mit so großer Geschwindigkeit in dem Überlappungsgebiet und damit auf dem opto-elektronischen Sensor bewegen, daß eine Auswertung nicht möglich ist. Die Anordnung ist nur an ruhenden Objekten anwendbar. Ihre Nutzung für die Online-Kontrolle scheidet damit aus.

Es steht die Aufgabe, ein Verfahren und eine Vorrichtung zu dessen Durchführung bereitzustellen, mit dem auch an rauhen, narbigen und nicht ideal glatten Oberflächen des Meßobjekts, vorzugsweise bei Behälterglas oder anderen durch eine Zwangsformung hergestellten, nicht frei geformten Glaserzeugnissen, zuverlässig Reflexstrahlen und damit Meßwerte erhalten werden können, die zugleich nicht durch keilige Wandungen und Verkippungen des Meßobjektes verfälscht sind und die auch bei stark gekrümmten, keiligen Wandungen auswertbare Signale der Sensoren liefern.

Die Aufgabe wird erfindungsgemäß dadurch gelöst, daß die Lichtstrahlen aus einer Leuchtfläche zunächst kollimiert und anschließend unter mehreren Einfallswinkeln zur Oberflächennormalen auf die Oberfläche des Meßobjektes fokussiert werden. Die beiden Reflexstrahlen jedes Lichtstrahles, die an der Vorder- und Rückseite auftreten, werden auf einem opto-elektronischen bildauflösenden Sensor zusammen als Reflexbild abgebildet. Gleichzeitig werden die Lichtstrahlen aus einer zweiten Leuchtfläche ebenfalls zunächst kollimiert und anschließend unter mehreren Einfallswinkeln auf die Oberfläche des Meßobjektes fokussiert, die den Ausfallswinkeln der reflektierten Strahlen aus der ersten Leuchtfläche entsprechen. Die Reflexstrahlen der zweiten Leuchtfläche werden auf einem zweiten opto-elektronischen bildauflösenden Sensor als Reflexbild abgebildet. In einem nachgeschalteten Kontroller wird als Maß der Wanddicke der Mittelwert der Abstände der jeweiligen zwei Reflexbilder auf den beiden opto-elektronischen bildauflösenden Sensoren bestimmt.

Das Wesen der Erfindung besteht darin, leuchtende Flächen auf die Meßpbjektoberfläche abzubilden. Durch die Verwendung einer diffus leuchtenden Fläche anstelle eines scharf gebündelten Laserstrahls erfolgt die Beaufschlagung der Meßobjektoberfläche aus unterschiedlichen Einfallsrichtungen. Der Strahlengang aus einer Leuchtfläche, der auf die Behälteroberfläche fokussiert wird, enthält eine große Bandbreite von Lichtbündeln, die aus verschiedenen Einfallswinkeln auf die Behälteroberfläche fallen. Damit ist sichergestellt, daß Teile des Strahlengangs trotz der narbigen, unebenen Oberfläche des Meßobjektes immer in die Empfangsoptik zurückreflektiert werden, auch wenn andere Bündel aus dem Strahlengang infolge dieser Oberflächendefekte ausfallen. Damit werden immer mindestens zwei Reflexstrahlen, d.h. ein Reflexbild auf dem opto-elektronischen bildauflösenden Sensor abgebildet.

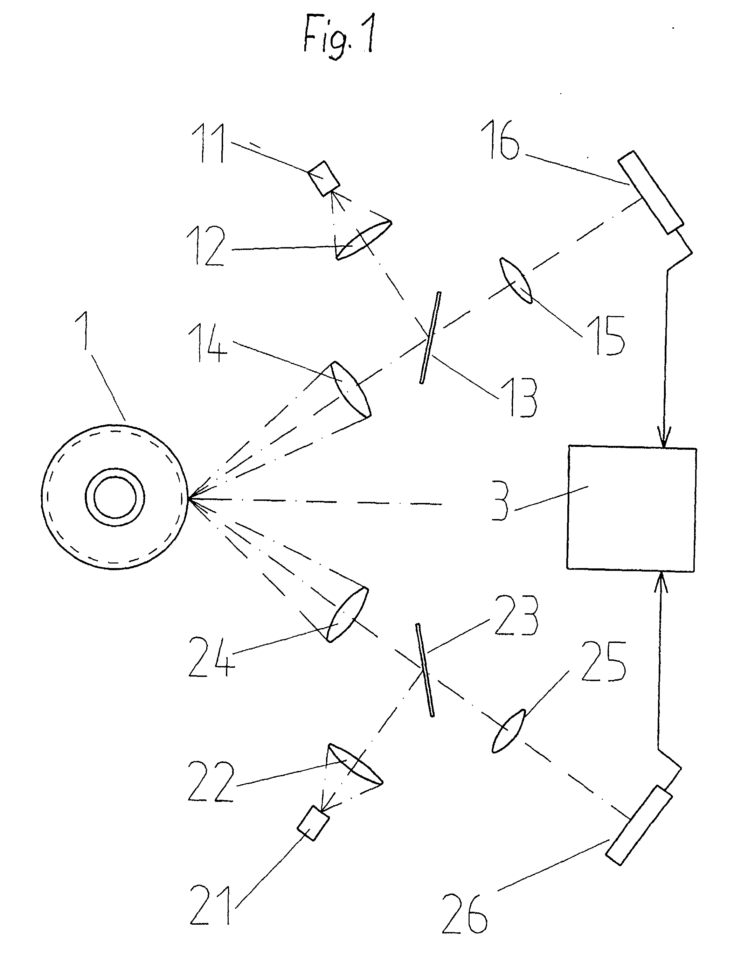

Weiterhin werden durch ein zweites optisches System, das den identischen Aufbau des ersten Systems besitzt, aber mit umgekehrter Strahlrichtung arbeitet, die Meßfehler durch Keiligkeit und Verkippung kompensiert und durch die weit geöffneten Strahlenbündel, die auf das Meßobjekt fallen, die Abbildung der Reflexstrahlen auf den Sensoren auch bei stark gekrümmten Oberflächen und keiligen Wandungen trotz begrenzter Apertur der Empfangsoptik gesichert.

Zugleich wird durch Erzeugung der Abbildung der Reflexionen zu Reflexbildern sichergestellt, daß keine Meßfehler infolge von Abweichungen der Oberflächennormalen des Meßobjektes auftreten können, was der Fall wäre, wenn die Reflexe ohne die Verwendung eines abbildenden optischen Systems direkt auf die Sensoren fallen würden.

Der Vorteil der Erfindung besteht darin, daß die zuverlässige Messung an narbigen, unebenen Oberflächen ermöglicht wird. Trotz der verhältnismäßig rauhen, unebenen Oberfläche des Meßobjektes, die für zwatigsgeformte Glasartikel, wie zum Beispiel Behälterglas im Gegensatz zu frei geformten anderen Gläsern typisch ist, werden stets auswertbare Reflexbilder auf den optoelektronischen Sensoren erzeugt, die die Bestimmung der Wanddicke gestatten. Zugleich werden Meßfehler infolge Keiligkeit der Wandung und Verkippung des Meßobjektes vermieden.

Ein Ausführungsbeispiel der Erfindung ist in der Zeichnung dargestellt und wird im folgenden näher erläutert.

Der Leuchtfläche 11, die beispielsweise durch eine linienförmige Lichtaustrittsöffnung eines Lichtleiters realisiert wird, ist das Objektiv 12 nachgeordnet. Von der Lichtaustrittsöffnung des Lichtleiters geht eine Vielzahl von Strahlenbündeln in unterschiedlichen Richtungen aus. Das Objektiv 12 erzeugt aus dem divergierenden Strahlengang, der aus der Leuchtfläche 11 austritt, einen parallelen Strahlengang, der über den halbdurchlässigen Spiegel 13 in das Objektiv 14 gelenkt wird. Das Objektiv 14 fokussiert den Strahlengang auf die Oberfläche des Meßobjektes 1. Dadurch wird die Oberfläche des Meßobjektes 1 am Meßort mit Strahlenbündeln aus unterschiedlichsten Richtungen beaufschlagt. Folglich wird das Bild der Leuchtfläche 11 als ein leuchtender Meßfleck auf der Oberfläche des Meßobjektes 1 erzeugt. Aus jedem Lichtstrahl entstehen zwei Reflexionsstrahlen an der Vorderseite und der Innenseite des Meßobjektes. Diese beiden Reflexionsstrahlen jedes Lichtstrahles werden durch das Objektiv 24 durch den halbdurchlässigen Spiegel 23 hindurch und weiter durch das Objektiv 25 für alle Strahlen zusammen als Reflexbild auf den Zeilensensor 26 abgebildet.
Damit entsteht ein Reflexbild jeweils aller beiden Reflexionsstrahlen auf dem Zeilensensor 26. Dem Zeilensensor 26 ist der Kontroller 3 nachgestellt, der den Abstand der beiden Reflexionsbilder bestimmt und diesen der weiteren Berechnung der Wanddicke zugrunde legt.

Zugleich ist der Leuchtfläche 21, die ebenfalls durch eine flächenförmige Lichtaustrittsöffnung eines Lichtleiters realisiert wird, das Objektiv 22 nachgeordnet. Auch dieses Objektiv erzeugt aus dem divergierenden Strahlengang, der aus dem Lichtleiter 21 austritt, einen parallelen Strahlengang, der über den halbdurchlässigen Spiegel 23 in das Objektiv 24 gelenkt wird, das ebenfalls den Strahlengang unter mehreren Einfallswinkeln auf die Oberfläche des Meßobjektes 1 fokussiert Diese Einfallswinkel der verschieden geneigten Strahlenbündel der Leuchtfläche 21 entsprechen den Ausfallswinkeln der Reflexstrahlen vom Meßobjekt, die aus der ersten Leuchtfläche 11 stammen. Von der Oberfläche des Meßobjektes 1 werden gleichfalls zwei Reflexionen an der Vorderseite und der Innenseite des Behälters entstehen, die ihren Ursprung in der Leuchtfläche 21 haben. Diese Reflexionen werden durch das Objektiv 14 durch den halbdurchlässigen Siegel 13 hindurch und weiter durch das Objektiv 15 auf den Zeilensensor 16 als Reflexbild abgebildet. Der Zeilensensor 16 ist ebenfalls mit dem Kontroller 3 verbunden, der den Abstand dieser beiden Reflexbilder ebenfalls bestimmt und diesen der weiteren Berechnung der Wanddicke zugrundelegt.
Die Wanddicke wird schließlich durch eine Mittelung der Abstände der Reflexe auf den beiden Sensoren 16 und 26 ermittelt.
Die Strahlengänge aus den Leuchtflächen 11 und 21 setzen sich aus Lichtbündeln zusammen, deren Ursprung jeweils auf unterschiedlichen Punkten der Leuchtfläche liegt und damit unterschiedliche Strahlenrichtungen aufweisen. Die verschiedenen Bündel des Strahlenganges der Leuchtfläche besitzen deshalb unterschiedliche Neigungen gegenüber der Oberfläche des Meßobjektes. Folglich wird die narbige, unebene Oberfläche des Meßobjektes nur die Bündel des Strahlenganges aus der idealen Reflektionsrichtung ablenken, die zufällig mit einer ungeeigneten Einfallsrichtung auf das Meßobjekt auftreffen. Andere Bündel aus dem Strahlengang hingegen werden trotz der Oberflächendefekte in die Richtung der Empfangsoptik reflektiert und tragen dort zur Bildung der beiden Reflexbilder auf den Sensoren 16 und 26 bei. Würde man einen Laserstrahl zur Erzeugung der beiden Reflexe an Außen- und Innenseite verwenden, wie es dem Stand der Technik entspricht, so wird man meistens keine Reflexbilder auf dem optoelektronischen Empfänger erhalten, da der eng gebündelte Laserstrahl, der das Meßobjekt stets aus der gleichen Einfallsrichtung trifft, an den Unebenheiten der Oberfläche in den überwiegenden Fällen stochastisch abgelenkt wird.

Zugleich wird durch die Verwendung der abbildenden Objektive 14 und 15 bzw. 24 und 25 erreicht, daß nicht schlechthin reflektierte Strahlen auf die Sensoren 16 und 26 fallen, sondern auf diesen Sensoren eine Abbildung der Reflexionen erzeugt wird, die an der Oberfläche des Behälters 1 entstehen. Dadurch wird die Meßanordnung robust und unempfindlich gegenüber Meßfehlern, die aus einer im makroskopischen Sinne unebenen Oberfläche oder aus einer Verkippung des Behälters resultieren würden.

Des weiteren werden dadurch, daß die Lichtstrahlen aus zwei Leuchtflächen aus entgegengesetzten Richtungen auf das Meßobjekt gerichtet werden, wobei die Ausfallsrichtungen der Strahlenbündel der ersten Leuchtfläche den Einfallsrichtungen der Strahlenbündel der zweiten Leuchtfläche entsprechen, die Meßfehler infolge Keiligkeit und Verkippung kompensiert.

Der Aufbau der zum Messen verwendeten Strahlengänge aus einem breiten Spektrum unterschiedlich geneigter Bündel hat letztlich zur Folge, daß auch bei stark keiligen oder gekrümmten Oberflächen und gleichzeitig begrenzter Apertur des Empfangsobjektivs zwei Reflexbilder auf den Sensoren abgebildet werden können. Zwar werden Bündel aus dem Strahlengang so zurückreflektiert, daß sie die Empfangsoptik verfehlen, andere Bündel jedoch tragen zur Bilderzeugung auf dem Sensor bei, so daß auch mit begrenzten Aperturen der Empfangsoptik gearbeitet werden kann.

### BEZUGSZEICHENLISTE

- 1: Meßobjekt (Behälter)
- 11: Leuchtfläche
- 12: Objektiv
- 13: halbdurchlässiger Spiegel
- 14: Objektiv
- 15: Objektiv
- 16: Sensor
- 21: Leuchtfläche
- 22: Objektiv
- 23: halbdurchlässiger Spiegel
- 24: Objektiv
- 25: Objektiv
- 26: Sensor
- 3: Kontroller

## Patentansprüche

1. Verfahren zum berührungslosen Messen der Wanddicke von transparenten Meßobjekten unter Verwendung von Lichtquellen (11; 21), Linsen, Umlenkspiegeln oder -prismen, halbdurchlässigen Spiegeln (13; 23) sowie Zeilensensoren (16; 26) und einem Kontroller (3), **gekennzeichnet dadurch,**
- **daß** mehrere in unterschiedliche Richtungen ausgesandte Strahlenbündel des diffusen Lichtes aus einer ersten Leuchtfläche (11) zunächst kollimiert und anschließend unter unterschiedlichen Einfallswinkeln zur Oberflächennormalen auf die Oberfläche des Meßobjektes (1) zu einer ersten leuchtenden Meßfläche fokussiert werden,
- **daß** die beiden von der Vorder- und Rückseite des Meßobjektes (1) ausfallenden Reflexstrahlen jedes Strahlenbündels der Meßfläche auf dem opto-elektronischen bildauflösenden Sensor (26) als Reflexbild abgebildet werden,
- **daß** gleichzeitig mehrere in unterschiedliche Richtungen ausgesandte Strahlenbündel des diffusen Lichtes aus einer zweiten Leuchtfläche (21) ebenfalls zunächst kollimiert und anschließend unter unterschiedlichen Einfallswinkeln zur Oberflächenormalen auf die Oberfläche des Meßobjektes (1) zu einer zweiten leuchtenden Meßfläche so fokussiert werden, daß die Einfallsrichtungen dieser Strahlenbündel den Ausfallrichtungen der Reflexstrahlen aus der ersten Leuchtfläche (11) entsprechen,
- **daß** weiterhin die Reflexstrahlen von der zweiten leuchtenden Meßfläche, die ebenfalls von der Vorder- und Rückseite des Meßobjektes (1) ausgesandt werden, auf dem zweiten opto-elektronischen bildauflösenden Sensor (16) als Reflexbild abgebildet werden und
- **daß** in einem nachgeschalteten Kontroller (3) der Mittelwert der Abstände der jeweiligen zwei Reflexbilder auf den beiden opto-elektronischen bildauflösenden Sensoren (26; 16) als Maß der Wanddicke des Meßobjektes (1) ausgewertet wird.

2. Vorrichtung zum berührungslosen Messen der Wanddicke von transparenten Meßobjekten unter Verwendung von Lichtquellen (11; 21), Linsen, halbdurchlässigen Spiegeln (13; 23) oder Prismen sowie bildauflösenden Sensoren (16; 26) und einem Kontroller (3), **gekennzeichnet dadurch,**
- **daß** einer ersten Leuchtfläche (11), um Strahlenbündel in unterschiedlichen Richtungen aus zu senden, ein Objektiv (12) nachgeordnet ist, hinter dem ein halbdurchlässiger Spiegel (13) in der Weise angeordnet ist, daß die Strahlenbündel des Lichtes aus der ersten Leuchtfläche (11) in ein Objektiv (14) reflektiert und weiter auf das Meßobjekt (1) zu einer ersten leuchtenden Meßfläche fokussiert werden,
- **daß** ein Objektiv (24) so angeordnet ist, daß es zusammen mit einem Objektiv (25) die vom Meßobjekt (1) reflektierten Strahlen der ersten leuchtenden Meßfläche durch einen halbdurchlässigen Spiegel (23) hindurch auf einem Sensor (26) als Reflexbild abbildet,
- **daß** gleichzeitig einer zweiten Leuchtfläche (21), um Strahlenbündel in unterschiedlichen Richtungen aus zu senden, ein Objektiv (22) zugeordnet ist, dem gleichfalls ein halbdurchlässiger Spiegel (23) in der Weise nachgeordnet ist, daß die Strahlenbündel des Lichtes aus der zweiten Leuchtfläche (21) durch das Objektiv (24) ebenfalls auf das Meßobjekt (1) zu einer zweiten leuchtenden Meßfläche fokussiert werden, wobei die Einfallsrichtungen der Strahlbündel den Ausfallsrichtungen der Reflexstrahlen aus der ersten Leuchtfläche (11) entsprechen und die Reflexstrahlen der zweiten Leuchtfläche (21) durch die Objektive (14; 15) auf einem Sensor (16) als Reflexbild abgebildet werden, und
- **daß** den beiden Sensoren (16; 26) ein Kontroller (3) nachgeschaltet ist.

3. Vorrichtung nach Anspruch 2, **gekennzeichnet dadurch, daß** die Leuchtflächen (11) und (21) Lichtaustrittsöffnungen von Lichtleitern, vorzugsweise Glasfaserbündeln darstellen.

4. Vorrichtung nach Anspruch 2 und 3, **gekennzeichnet dadurch, daß** die Lichtaustrittsöffnungen der Lichtleiter linienförmig gestaltet sind.

5. Vorrichtung nach Anspruch 2, **gekennzeichnet dadurch, daß** die Leuchtflächen (11) und (21) als Lichtquellen mit vorgesetzten Spaltblenden ausgeführt sind.

## Claims

1. A process for the contactless measuring of the wall thickness of transparent objects to be measured, using light sources (11; 21), lenses, surface mirrors or deviating prisms, semitransparent mirrors (13; 23) together with line sensors (16; 26) and a controller (3), **characterised by**
- the fact that several beams of diffuse light emitted from a first luminous area (11) in different directions are first collimated and then focused at different incident angles to the surface normal onto the surface of the object to be measured (1) to form a first luminous measuring area,
- the fact that the two rays reflected by the front and rear sides of the object to be measured (1) of each beam of the measuring area are projected onto the optoelectronic image-resolving sensor (26) as reflex image,
- the fact that at the same time several beams of the diffuse light emitted in various directions from a second luminous area (21) are also first collimated and then focused at different incident angles to the surface normal onto the surface of the object to be measured (1) to form a second luminous measuring area such that the directions of incidence of these beams correspond to the directions of emission of the reflected rays from the first luminous area (11),
- the fact that, furthermore, the reflected rays of the second luminous measuring area emitted also from the front and rear sides of the object to be measured (1) are imaged as reflex image onto the second optoelectronic image-resolving sensor (16), and
- the fact that in a controller (3) which is connected at the end of the system, the mean of the distances between the two respective reflex images received at the two optoelectronic image-resolving sensors (26; 16) is determined and taken as the measure of the wall thickness of the object to be measured (1).

2. A device for the contactless measuring of the wall thickness of transparent objects to be measured, using light sources (11; 21), lenses, semitransparent mirrors (13; 23) or prisms, together with image-resolving sensors (16; 26) and a controller (3), **characterised by**
- the fact that behind the first luminous area (11) a lens (12) is placed allowing beams to be emitted in different directions, behind which a semitransparent mirror (13) is so arranged that the beams of the light from the first luminous area (11) are reflected into a lens (14) and then focused onto the object to be measured (1) to the first luminous measuring area,
- the fact that a lens (24) is so arranged that it images, together with a lens (25), the rays reflected by the object to be measured (1) of the first luminous measuring area through a semitransparent mirror (23) onto a sensor (26) as reflex image,
- the fact that, at the same time, a lens (22) is placed in relation to a second luminous area (21) allowing beams to be emitted in different directions, behind which lens a semitransparent mirror (23) is likewise so arranged that the beams of the light from the second luminous area (21) are also focused through the lens (24) onto the object to be measured (1) to a second luminous area, with the directions of incidence of the beams corresponding to the directions of emission of the reflected rays from the first luminous area (11), and the reflected rays of the second luminous area (21) being imaged as a reflex image onto a sensor (16) through the lenses (14; 15), and
- the fact that a controller (3) is arranged after the two sensors (16; 26).

3. A device according to claim 2, **characterised by** the fact that the luminous areas (11) and (21) represent light emission orifices of optical conductors, preferably optical fibre bundles.

4. A device according to claims 2 and 3, **characterised by** the fact that the light emission orifices of the optical conductors are of a linear shape.

5. A device according to claim 2, **characterised by** the fact that the luminous areas (11) and (21) are in the form of light sources with slit diaphragms placed before them.

## Revendications

1. Procédé pour la mesure sans contact de l'épaisseur de paroi d'objets de mesure transparents en utilisant de sources lumineuses (11 ; 21), de lentilles, de miroirs de déviation ou de prismes déviateurs, de miroirs semi-transparents (13 ;23) ainsi que de palpeurs de lignes (16 ;26) et un contrôleur (3), **caractérisé en ce que**
- plusieurs faisceaux lumineux de la lumière diffuse émis par une première surface lumineuse (11) dans différentes directions sont, tout d'abord, liés ensemble et ensuite focalisés sous différents angles d'incidence, par rapport à la normale de surface, sur la surface de l'objet de mesure (1) pour former une première surface de mesure lumineuse,
- les deux rayons réfléchis émis par le front et le derrière de l'objet de mesure (1) de chaque faisceau lumineux de la surface de mesure sont représentés sur le palpeur opto-électronique de résolution d'image (26) comme images de reflet,
- plusieurs faisceaux lumineux de la lumière diffuse émis simultanément par une seconde surface lumineuse (21) dans différentes directions sont aussi, tout d'abord, liés ensemble et ensuite focalisés sous différents angles d'incidence, par rapport à la normale de surface, sur la surface de l'objet de mesure (1) pour former une seconde surface de mesure lumineuse de telle manière que les directions d'incidence de ces faisceaux lumineux correspondent aux directions de réflexion des rayons réfléchis émis par la première surface de mesure lumineuse (11),
- en plus, les rayons réfléchis émis par la seconde surface de mesure lumineuse, qui sont également émis par le front et le derrière de l'objet de mesure (1), sont représentés sur le second palpeur opto-électronique de résolution d'image (16) comme images de reflet, et que
- dans un contrôleur secondaire (3), la moyenne des distances entre les deux images de reflet respectifs sur les deux palpeurs opto-électroniques de résolution d'image (26 ;16) est exploitée comme mesure de l'épaisseur de paroi de l'objet de mesure (1).

2. Dispositif pour la mesure sans contact de l'épaisseur de paroi d'objets de mesure transparents en utilisant des sources lumineuses (11 ;21), des lentilles, des miroirs semi-transparents (13 ;23) ou des prismes ainsi que des palpeurs de résolution d'image (16 ;26) et un contrôleur (3), **caractérisé en ce que**
- un objectif (12) est placé après une première surface lumineuse (11) afin d'émettre des faisceaux lumineux dans différentes directions, et que derrière cet objectif un miroir semi-transparent (13) est disposé de telle manière que les faisceaux lumineux de la lumière émis par la première surface lumineuse (11) soient réfléchis dans un objectif (14) et ensuite focalisés sur l'objet de mesure (1) pour former une première surface de mesure lumineuse,
- un objectif (24) est disposé de telle manière que cet objectif représente, avec un objectif (25), les rayons réfléchis émis par la première surface de mesure lumineuse sur un palpeur (26) comme images de reflet, à travers un miroir semi-transparent (23),
- un objectif (22) appartenant à une seconde surface lumineuse (21) est prévu pour émettre des faisceaux lumineux dans différentes directions, et qu'un miroir semi-transparent (23) est disposé après cet objectif de telle manière que les faisceaux lumineux de la lumière émis par la seconde surface lumineuse (21) soient focalisés, à travers l'objectif (24), également sur l'objet de mesure (1) pour former une seconde surface de mesure lumineuse, les directions d'incidence des faisceaux lumineux correspondant aux directions de réflexion des rayons réfléchis émis par la première surface lumineuse (11), et les rayons réfléchis émis par la seconde surface lumineuse (21) étant représentés comme images de reflet sur un palpeur (16) à travers les objectifs (14 ;15), et que
- un contrôleur (3) est disposé après les deux palpeurs (16 ;26).

3. Dispositif selon la Revendication 2, **caractérisé en ce que**
- les surfaces lumineuses (11) et (21) représentent des orifices de sortie de guides de lumière, de préférence de fibres optiques.

4. Dispositif selon les Revendications 2 et 3, **caractérisé en ce que**
- les orifices de sortie de guides de lumière sont en forme de ligne.

5. Dispositif selon la Revendication 2, **caractérisé en ce que**
- les surfaces lumineuses (11) et (21) sont conçues comme sources lumineuses avec des diaphragmes à fente rapportés.
